# EUROPEAN PATENT SPECIFICATION

(11) **EP 1 348 312 B1**
(45) Date of publication and mention of the grant of the patent: **25.08.2010**
(21) Application number: 01272691.5
(22) Date of filing: 19.12.2001
(51) Int. Cl.: H04W 64/00

(54) **SELECTING DOMAIN FOR TRANSMITTING A LOCATION SERVICE REQUEST**
DOMAIN-AUSWAHL ZUM SENDEN EINER ORTBESTIMMUNGSDIENSTANFORDERUNG
SELECTION D'UN DOMAINE POUR LA TRANSMISSION D'UNE DEMANDE DE SERVICE DE LOCALISATION

(30) Priority: 28.12.2000 FI 20002867
(43) Date of publication of application: 01.10.2003
(73) Proprietor: Nokia Siemens Networks Oy, 02610 Espoo (FI)
(72) Inventor: KÅLL, Jan, FIN-02730 Espoo (FI); VÄNTTINEN, Veijo, FIN-02770 Espoo (FI); MUHONEN, Janne, FIN-00980 Helsinki (FI)
(74) Representative: Bruglachner, Thomas E.
(86) International application number: PCT/FI2001/001132
(87) International publication number: WO 2002/054812

(56) References cited:
- WO-A1-00/25545
- WO-A2-00/05907
- US-B1- 6 219 557

## Description

### FIELD OF THE INVENTION

The invention relates to selecting a domain via which a mobile terminated location request is transmitted in mobile communications systems comprising two different domains both supporting location services, and more particularly to systems comprising a packet switched domain and a circuit switched domain. A mobile communications system refers generally to any telecommunications system which enables wireless communication when users are moving within the service area of the system. A typical mobile communications system is a Public Land Mobile Network (PLMN).

### BACKGROUND OF THE INVENTION

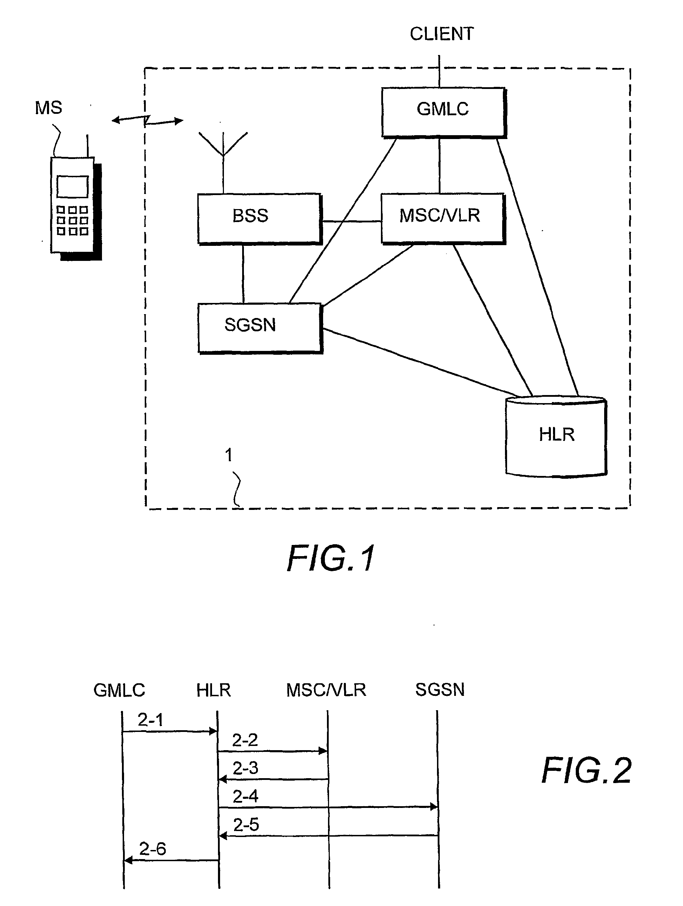

Mobile communications systems have been developed because there has been a need to free users to move away from fixed telephone terminals without impairing the availability of users. An example of an existing mobile communications system is the pan-European mobile communications system GSM (Global System for Mobile Communications). The General Packet Radio Service GPRS is one of the services of GSM Phase 2+. The GPRS service allows packet data transfer between mobile data terminals and external data networks, while the "original" GSM network allows circuit-switched communications. If the user is attached to a packet data service and to a circuit-switched service at the same time, he/she is connected to two different kinds of domains. The GPRS network architecture is illustrated in Figure 1.

Simultaneously with the development of mobile communications systems, various services have also been introduced in mobile communications systems, such as value added services customized according to the user's location. Examples of location-specific value-added services include localized weather forecasts, entertainment programmes, timetables, navigation and locating a mobile user in an emergency. Additionally, the user's location can also be used for law-enforcement purposes. These services are called location services (LCS). Here the term 'location service' refers to the task of tracking the location of a mobile station in terms of geographical coordinates. This task is not necessary for routing calls. There are several known methods by which a mobile station can be located with reasonable precision. Details of the location procedure are not relevant to this invention, however.

Patent application WO 00/25545, which is incorporated herein by reference with its cross-references, discloses how to locate a target mobile station MS in systems comprising two different domains supporting the LCS. In WO 00/25545 an GMLC (Gateway Mobile Location Center), via which the location service requests are routed, receives as routing instructions for LCS the current address of a first network node providing location information in the first domain and the current address of a second network node providing location information in the second domain when both addresses are available. When the GMLC receives these two addresses, it determines the preferred type of domain via which the GMLC first tries to get location information on the target MS, and if the location information can not be obtained via the preferred domain, the GMLC tries the other domain.

A problem with this solution is that the GMLC may receive both addresses even when the target MS is not reachable via a domain since the entity providing the routing instructions does not know whether or not the target MS is reachable. Thus the GMLC may try to get location information first via a domain where the mobile station is not reachable. This leads to unnecessary delays and causes unnecessary signalling.

Similar problem exists also in the third generation mobile communications systems which also comprise a PC domain and a CS domain. Some of the systems comprise different access networks, such as a second generation access network (e.g. GSM) and a third generation access network. These different networks may also have different domains.

### BRIEF DESCRIPTION OF THE INVENTION

An object of the present invention is to provide a method and an apparatus for implementing the method so as to solve the above problem. The object of the invention is achieved by methods, a system and network nodes which are characterized by what is stated in the independent claims. The preferred embodiments of the invention are disclosed in the dependent claim.

The invention is based on realizing the problem and solving it by enhancing the LCS routing information procedure by steps of finding out the state of the target MS at least in one domain and preferably in both domains and utilizing state information to select the domain via which attempts are first made to obtain the location information on the target MS. The state indicates whether the target MS is attached to the domain, and preferably whether the target MS is active in the domain.

The term 'domain' covers here different domains within a network and different networks to which the target MS may have access.

An advantage of the invention is that it prevents sending of location requests to a domain the MS is not attached to, and thus unnecessary signalling and delays are avoided.

In one embodiment of the invention the state indicates whether the target MS is active in the domain. The further advantage of the embodiment is that by relaying the location request via the domain in which the target MS is active extra signalling is not necessary needed.

### BRIEF DESCRIPTION OF THE DRAWINGS

In the following the invention will be described in greater detail by means of preferred embodiments with reference to the attached drawings, in which
Figure 1 is a block diagram illustrating an embodiment of a telecommunications system where the invention can be used; and
Figures 2 to 5 illustrate signalling in different embodiments of the invention.

### DETAILED DESCRIPTION OF THE INVENTION

Figure 1 is a block diagram illustrating a preferred embodiment of the invention. The invention will be described in connection with the GSM and the GPRS (General Packet Radio Service), substantially in accordance with the relevant ETSI recommendations. However, it should be understood that the GSM and GPRS systems have been chosen only for the purposes of illustration, and the invention is applicable in any telecommunications system supporting circuit-switched and packet-switched connections. Another example of such a system is a 3GPP All-IP system, i.e. a UMTS (Universal Mobile Telecommunications System) based on IP (Internet Protocol) technology and defined in the 3^{rd} generation partnership project 3GPP. The UMTS is one of the third generation mobile communications systems. The third generation mobile communications systems may comprise different access networks, such as GSM, UTRAN (UMTS Radio Access Network), WLAN (Wireless Local Access Network) and/or BRAN (Broadband Radio Access Network) where the invention can be used to select the network and a domain within the network.

Figure 1 shows a simplified network architecture and illustrates only those elements of the telecommunication system 1 that are essential for understanding the invention. Network nodes shown in Figure 1 are logical units, the implementation of which may differ from the one described. It is obvious to one skilled in the art that the system 1 also comprises other functions and structures which need not be described in closer detail here. In other systems the names of the network nodes and mobile stations may differ from those disclosed here.

Apart from the Gateway Mobile Location Center GMLC, the remaining nodes are known from prior art GSM and GPRS systems. The GMLC performs location services related to mobile equipment and/or subscribers for LCS clients. The GMLC in accordance with the invention may be configured to perform one or more of features disclosed below by preferred embodiments.

The MS is normally a mobile phone, but it can be any entity which uses the standard air interface, for example a measurement unit connected to the network through the air interface. In this context, a mobile station generally refers to a combination of a mobile unit and a mobile subscriber identified in the system by e.g. a SIM (Subscriber Identity Module) card detachably coupled to the mobile unit.

The basic GSM network comprises a base station subsystem BSS as a RAN (Radio Access Network). The network subsystem comprises a mobile services switching centre MSC, a visitor location register VLR and a home location register HLR. In the example of Figure 1 the MSC and the VLR are in the same network node MSC/VLR. The MSC manages the switching of circuit-switched services and carries out functions that are only characteristic of mobile communications, in co-operation with the VLR and the HLR. The VLR stores the subscriber data of an MS temporarily while the MS is in the area of the MSC connected to the VLR if the MS is attached to circuit-switched services. For the location service LCS, the MSC/VLR has a connection, to the GMLC. This basic GSM network offers a circuit-switched connection, i.e. an CS domain to the LCS via the MSC/VLR to a mobile station attached to the basic GSM network.

In a circuit switched domain (CS domain) the MS can be located within one cell if the mobile station has an,ongoing call. When the MS has an ongoing call, the state of the MS is active. If the MS does not have an ongoing call but is attached to the CS domain, the MS is in idle state. The MS is attached to the CS domain when the power is on. When the power is off, the MS is in detached state, i.e. is detached from the CS domain and cannot be reached via CS domain.

In Figure 1, the GPRS comprises a serving GPRS support node SGSN. The SGSN is a node serving a mobile station MS. Each SGSN controls a packet data service within the area of one or more cells in a cellular packet radio network. Usually basic GSM and GPRS have the same radio access network and each support node SGSN is therefore connected to a certain local element of the GSM system. However, the number of radio access networks and/or how the nodes are connected to these radio access networks is irrelevant to the invention. This connection is typically made to the base station subsystem BSS. The SGSN is also provided with a signalling interface to the MSC/VLR. For the location service LCS, the SGSN network has a connection to the GMLC. This route offers a packet-switched connection, i.e. a PS domain, to the LCS.

The state of the MS in the PS domain is easily found out from the mobility management (MM) activities related to a GPRS subscriber. The MM activities are characterized by three different MM states of the mobile station MS: Idle State, Standby State, and Ready State. Each state describes a certain level of functionality and information allocated to the MS and to the SGSN. The information sets relating to these states, which are maintained in the SGSN and in the MS, are denoted MM contexts. The MM context comprises subscriber data, such as the subscriber IMSI, TLLI, and location or routing data, etc. In the idle state, the mobile station MS is not reachable from the point of view of the GPRS. If the MS is of dual mode type, i.e. is capable of operating in GPRS and GSM networks, it may be in the GSM network when being in GPRS-Idle state. In the GPRS-standby and GPRS-ready states, the mobile station MS is attached to the GPRS network and in the GPRS-ready state the MS, is active.

The home location register HLR of the GSM network comprises GPRS subscriber data and routing information, including the International Mobile Subscriber Identity (IMSI). The HLR maintains in its registers a subscription list for each subscriber over the services of the subscriber. The home location register HLR in accordance with the invention may also be configured to perform one or more of functions disclosed below by preferred embodiments. The HLR of a roaming mobile station MS may be in a different mobile communications network than the serving SGSN or the serving MSC/VLR. The HLR is not usually aware of the state of the mobile station, it only knows the addresses since the HLR is not usually informed on the MS detach. Thus, the HLR has for subscribers (target MSs) having subscription to both CS domain and PS domain routing address in both domains regardless of the state of the MS in the domains. In some GPRS systems the HLR may have a flag 'purged for GPRS' on when the MS is detached from the GPRS domain. For subscribers having subscription only to one domain the HLR has a routing address only in that domain.

The present invention can be implemented in existing network nodes. They all have processors and memories with which the inventive functionality described below may be implemented.

Figure 2 illustrates signalling according to a first preferred embodiment of the invention when the GMLC has received an LCS service request from a client. For the sake of clarity it is assumed that the request concerns only one target MS. It is also assumed that the target MS has a subscription to both domains, i.e. has in the HLR a routing address for both domains. It is also assumed that the target MS supports both domains. The support for a domain can be deduced from a classmark of the target MS and the HLR may be configured to give routing address only in the domains the target MS supports, i.e. interpret that the subscriber has subscription only to domains the target MS used by the subscriber supports.

In response to receiving an LCS service request from the client, the GMLC verifies the identity of the LCS application and its subscription to the LCS service requested. The GMLC also derives an identifier (e.g. the MSISDN) of the target MS to be located and the LCS QoS (quality of service) from either the subscriber data or from the data supplied by the client. Then the GMLC checks whether or not the MS subscriber is a GSM subscriber, i.e. whether or not there is a VMSC and/or an SGSN address for the MS, by sending message 2-1 to the HLR of the target MS. Message 2-1 is preferably a MAP_SEND_ROUTING_INFO_FOR_LCS message. The message is routed to the HLR using the MSISDN number. In response to receiving message 2-1, the HLR verifies that the GMLC, i.e. checks, if the GMLC is authorized to request MS location information.

In the first preferred embodiment of the invention the HLR is configured to request , in response to receiving message 2-1, information on the state of the target MS in both domains at least if the target MS has routing address to both domains. Thus, in the example illustrated in Figure 2, the HLR requests the state of the target MS in the CS domain by sending message 2-2 to the MSC/VLR serving the target MS. Message 2-2 is preferably a MAP_PROVIDE_SUBSCRIBER_INFORMATION_message.

The MSC/VLR detects whether the MS is engaged in a circuit-switched call, i.e. whether the subscriber state in CS domain is active. The MSC/VLR indicates the subscriber state to the HLR in the message 2-3. Message 2-3 is preferably a MAP_PROVIDE_SUBSCRIBER_INFORMATION_RESPONSE message.

The HLR also requests the subscriber state of the target MS in the PS domain by sending message 2-4 to the serving SGSN. The SGSN sends the MM state of the target MS to the HLR in message 2-5.

After receiving messages 2-3 and 2-5, the HLR composes message 2-6 to the GMLC. In the first preferred embodiment of the invention, the HLR is configured to add to message 2-6 only the address of the MSC/VLR if message 2-3 indicated that the subscriber state was not detached and message 2-4 indicated that the MM state was idle. Correspondingly, the HLR is configured to add to message 2-6 only the address of the SGSN if message 2-4 indicated that the MM state was either standby or ready and message 2-3 indicated that the subscriber state was detached. When message 2-6 is ready, the HLR sends message 2-6 to the GMLC.

If the GMLC receives only either the address of the SGSN or the address of the MSC/VLR, then the GMLC sends the location request towards the address in message 2-6. If both addresses, i.e. the address of the SGSN and the address of the MSC/VLR, were received from the HLR in message 2-6, the GMLC has to decide which one to try first. An operator and/or a subscriber can define a set of rules (i.e. selection criteria) which is used for selecting the domain. The set of rules comprises at least one rule. Examples of different rules are: selection on the basis of the tariffs (which may change with time), selection on the basis of the target MS capability and/or according to the type or age of the SIM card. The the signalling load in different domains can be one criterion, so that the less loaded domain is preferred. The subscriber data may also have an indication of the preferred domain, or the client may indicate the preferred domain, or the GMLC may ask the preferred domain from the client.

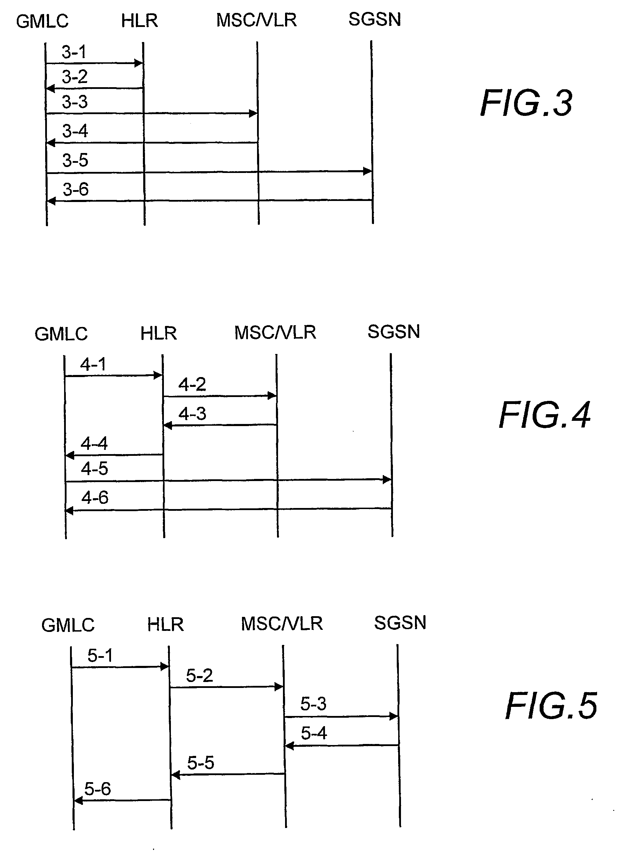

The relaying of the location request from the GMLC and how the location of the target MS is determined is not shown in Figure 2 (and in Figures 3, 4 and 5) since it is irrelevant to the invention.

In one embodiment of the invention the HLR is configured first to check the state of the target MS in the CS domain and if the state is active, not to request the state of the target MS in PS domain, but instead send message 2-6 comprising the address of the MSC/VLR. Thus, in this embodiment, messages 2-4 and 2-5 are omitted when the target MS is engaged in a circuit switched call.

In one embodiment of the invention the HLR is configured first to check the state of the target MS in the PS domain and if the state is ready, not to request the state of the target MS in the CS domain, but instead send message 2-6 comprising the address of the SGSN. Thus, in this embodiment, messages 2-2 and 2-3 are omitted when the target MS is active in the PS domain.

In one embodiment of the invention the HLR is configured to add both the addresses of the MSC/VLR and the SGSN and the states of the MS in the CS domain and the PS domain, and the GMLC is configured to prefer the address if the corresponding state indicates that the target MS is active in that domain and to ignore the address if the corresponding state indicates that the target MS is not attached tp that domain.

In some other embodiments of the invention the GMLC may add to the message requesting routing information, i.e. message 2-1, a parameter or parameters, the value(s) of which indicate(s) whether the GMLC requires state information on both domains or only one of the domains or none of the domains. In the embodiments the HLR is configured to act according to the parameter value(s). In these embodiments of the invention the GMLC may be configured to store previously obtained location information and/or information when and from which network node previous location information was obtained and on the basis of the stored information to decide whether or not it requires state information.

Figure 3 illustrates signalling according to a second preferred embodiment of the invention. The assumptions made for Figure 3 are the same as for Figure 2.

In response to receiving an LCS request from the client, the GMLC acts as described for Figure 2 and sends message 3-1 requesting routing information for LCS to the HLR. The HLR verifies the GMLC and sends response message 3-2 comprising the address of the SGSN and the address of the MSC/VLR of the target MS to the GMLC according to prior art.

In the second preferred embodiment of the invention, the GMLC is configured to request information on the state of the target MS in both domains in response to receiving message 3-2 comprising the address of the SGSN and the address of the MSC/VLR. Therefore, the GMLC sends to the MSC/VLR message 3-3 requesting information on the state of the target MS in the CS domain. The MSCNLR indicates the subscriber state to the GMLC in the message 3-4. The GMLC also requests the subscriber state of the target MS in PS domain by sending message 3-5 to the serving SGSN. The SGSN sends the MM state of the target MS to the GMLC in message 3-6. The GMLC decides on the basis of the information received in messages 3-4 and 3-6 via which domain the location information request should be sent. The decision is easy if the target MS is attached only to one of the domains or is active only in one domain, since the domain is then used. If the target MS is active in both domains or not active but attached to both of the domains, the selection may be performed as described for Figure 2.

In one embodiment of the invention the GMLC is configured first to check the state of the target MS in the CS. domain and if the state is active, not to request the state of the target MS in the PS domain, but instead send the location request via the CS domain. Thus, in this embodiment, messages 3-5 and 3-6 are omitted when the target MS is engaged in a circuit switched call.

In one embodiment of the invention the GMLC is configured first to check the state of the target MS in the PS domain and if the state is ready, not to request the state of the target MS in the CS domain, but instead send the location request via the PS domain. Thus, in this embodiment, messages 3-3 and 3-4 are omitted when the target MS is active in the PS domain.

Figure 4 illustrates signalling according to a third preferred embodiment of the invention. The assumptions made for Figure 4 are the same as for Figure 2.

In response to receiving an LCS request from the client, the GMLC acts as described for Figure 2 and sends message 4-1 requesting routing information for LCS to the HLR. The HLR verifies the GMLC as described earlier. In the third preferred embodiment of the invention the HLR is configured to request the state of the target MS in the CS domain in response to receiving message 4-1 at least when the target MS has both an SGSN address and an MSC/VLR address as a routing address. Therefore, the HLR sends to the MSC/VLR message 4-2 requesting information on the state of the target MS in the CS domain. The MSC/VLR indicates the subscriber state to the HLR in message 4-3.

After receiving message 4-3, the HLR composes message 4-4 to the GMLC. In the third preferred embodiment of the invention, when the address of the SGSN is available the HLR is configured to add to message 4-4 the address of the MSC/VLR only if message 4-3 indicated that the state of the target MS was active. The HLR adds the address of the SGSN to message 4-3 if the address of the SGSN is available. When message 4-3 is ready, the HLR sends message 4-3 to the GMLC.

If the GMLC receives in message 4-3 only either the address of the SGSN or the address of the MSC/VLR, then the GMLC sends the location request to the address in message 4-3. If both addresses, i.e. the address of the SGSN and the address of the MSC/VLR, were received from the HLR in message 4-3, the GMLC is configured to request the subscriber state of the target MS in the PS domain by sending message 4-4 to the serving SGSN. The SGSN sends the MM state of the target MS to the GMLC in message 4-5. If the MM state is idle, the GMLC sends the location request via the CS domain. If the MM state is ready (i.e. MS is active in both domains), the selection via which domain the location information request should be sent may be performed as described for Figure 2.

In some other embodiment of the invention the GMLC may add to message 4-1 a parameter, the value of which indicates whether the GMLC requires information on the state of the target MS in the CS domain. In the embodiment the HLR is configured to act according to the parameter value.

In some other embodiment of the invention the HLR is configured to add the address of the MSC/VLR to message 4-4 if the message 4-3 indicated that the state of the target MS was not detached.

Figure 5 illustrates signalling according to a fourth preferred embodiment of the invention. The assumptions made for Figure 5 are the same as for Figure 2.

In response to receiving an LCS request from the client, the GMLC acts as described for Figure 2 and sends message 5-1 requesting routing information for LCS to the HLR. The HLR verifies the GMLC as described earlier. In the fourth preferred embodiment of the invention the HLR is configured to request the state of the target MS in both domains via the CS domain at least for subscribers having routing address to both domains, in response to receiving message 5-1. Thus, the HLR requests the state of the target MS in the CS domain and in the PS domain by sending message 5-2 to the MSCNLR serving the target MS. Message 5-2 includes also the address of the serving SGSN.

In response of receiving message 5-2, the MSCNLR is configured to send message 5-3 to the SGSN to request the MM state of the target MS. The SGSN is configured to send message 5-4 indicating the MM state of the target MS to the MSCNLR in response to receiving message 5-3.

After receiving message 5-4 the MSCNLR composes message 5-4 including information on the state of the target MS in the CS domain and in the PS domain. When message 5-5 is ready, the MSC/VLR sends message 5-5 to the HLR as a response message to request message 5-2. The HLR forwards in message 5-6 the state information of message 5-5 to the GMLC.

The GMLC decides on the basis of the information in message 5-5 via which domain the location information request should be sent. The decision is easy if the target MS is attached only to one of the domains or is active only in one domain, since the domain is then used. If the target MS is active in both domains or not active but attached to both of the domains, the selection may be performed as described for Figure 2.

In one embodiment of the invention the MSCNLR is configured to send message 5-3 only if the MSCNLR has no information on the MM state.

In one embodiment of the invention the MSCNLR is configured to add to message 5-5 the address of the MSCNLR only if the subscriber state is active in the CS domain and the address of the SGSN only if message 5-4 indicated that the MM state was either standby or ready.

In one embodiment of the invention the MSC/VLR is configured first to check if the state of the target MS in the CS domain is active, and if the target MS is active not to request the state of the target MS in the PS domain, but instead send message 5-5 comprising the state of the target MS in the CS domain. Thus, in this embodiment, messages 5-3 and 5-4 are omitted when the target MS is engaged in a circuit switched call.

In one embodiment of the invention the HLR is configured to send in message 5-6 the address of the MSCNLR only if message 5-5 indicated that the subscriber state was active and the address of the SGSN only if message 5-5 indicated that the MM state was either standby or ready.

In some other embodiments of the invention the GMLC may add to message requesting routing information, i.e. message 5-1, a parameter or parameters, the value(s) of which indicate(s) whether the GMLC requires state information on both domains or only one of the domains or none of the domains. In the embodiments the HLR is configured to send message 5-2 including the parameter value(s) of message 5-1 and the MSC/VLR is configured to act according to the parameter value(s) when the GMLC requires state information on at least one of the domains.

The signalling messages shown in Figures 2 to 5 are not in absolute chronological order and some of the signalling may be performed simultaneously or differing from the given order. Other functions can also be executed between the described signalling. For example, the MSC and/or the SGSN may accomplish some radio access network procedures in response to receiving the message requesting the state of the target MS. Some of the signalling can also be left out. For example, if the GMLC already knows the address of the SGSN and/or MCS/VLR (e.g. the GMLC has stored the results from a previous location request in a cache-type memory), messages requesting the state of the target MS in corresponding domain(s) may be skipped. However, even if the addresses of the SGSN and MSC/VLR are present at the GMLC for a particular user, the GMLC may perform the above described functionality in order to make sure that it has the most recent information. (In other words, if the GMLC stores the information in a cache, the information preferably has a maximum lifetime.)

The signalling messages are only exemplary and may even comprise several separate messages for transmitting the same information. In addition, the messages can also contain other information. The messages can also be freely combined or divided into several parts. Furthermore, the names of the messages may differ from the above-mentioned ones. Depending on the network structure, other network nodes between which different functions have been divided may participate in the signalling.

Although the invention has been described above with embodiments having two domains, it is obvious to one skilled in the art that the invention can be applied to select a preferred network node to which the GMLC first relays the location request when there are more than two domains and/or networks the target MS can be attached to. For example, the invention can be applied to select whether to send the location request to a network node in a GSM domain (i.e. the GSM network) or to a network node in an UMTS domain (i.e. the UMTS network).

The features of the above embodiments may be combined differently than disclosed above to obtain other embodiments of the invention.

Each of the parameter insertions described in connection with the figures above can be carried out independently of other parameter insertions, and insertions may be freely combined. The names of the signalling messages may differ from those set out above, but the information transmitted in the messages is the same. The messages may also include more information than what is stated above. It will be obvious to a person skilled in the art that, as the technology advances, the inventive concept can be implemented in various ways. The invention and its embodiments are not limited to the examples described above but may vary within the scope of the claims.

## Claims

1. A method of selecting a domain via which a location request is transmitted in a mobile communications system comprising at least a first domain and a second domain both supporting location services, the method comprising the steps of:
receiving a location request relating to a target mobile station from a requesting entity;
**characterized by**
requesting, in response to said target mobile having a first routing address in the first domain and a second routing address in the second domain, the state of the target mobile station at least in the first domain;
receiving information on the state;
deciding on the basis of the received information on the state via which domain the location information request should be transmitted; and
transmitting the location request to the target mobile station via the first domain if the state indicates that the mobile station is active in the first domain.

2. A method of selecting a domain via which a location request is transmitted in a mobile communications system comprising at least a first domain and a second domain both supporting location services, the method comprising the steps of:
receiving a location request relating to a target mobile station from a requesting entity;
**characterized by**
requesting, in response to said target mobile having a first routing address in the first domain and a second routing address in the second domain, the state of the target mobile station in the first domain and in the second domain;
receiving information on the states;
deciding on the basis of the received information on the states via which domain the location information request should be transmitted;
if the state of the target mobile indicates that the target mobile is detached from the first domain and the state of the target mobile in the second domain indicates that the target mobile is attached to the second domain, transmitting the location request to the target mobile station via the second domain; and
if the state of the target mobile indicates in the first domain and the second domain that the target mobile is attached to the domain, selecting, on the basis of a predetermined set of rules comprising at least one rule, the domain to be used and transmitting the location request via the selected domain.

3. A method according to claim 1 or 2, **characterized in that** the first domain is a circuit switched domain and the second domain is a packet switched domain.

4. A method according to claim 1 or 2, **characterized in that** the first domain is a packet switched domain and the second domain is a circuit switched domain.

5. A system (1) comprising at least
a first domain (MSCNLR, SGSN) supporting a location service; and
a second domain (MSCNLR, SGSN) supporting the location service,
a first network node (GMLC) for routing via either the first or the second domain a location service request relating to a target mobile station (MSC);
**characterized in that**
the system (1) is arranged, in response to said target mobile having a first routing address in the first domain and a second routing address in the second domain, to request the state of the target mobile station (MS) at least in the first domain (MSCNLR, SGSN) and to use the information on the state of the target mobile station in the first domain when selecting the domain to which the location request is first transmitted.

6. A system according to claim 5, **characterized in that**
the system (1) is arranged to request the state of the target mobile station (MS) also in the second domain (MSCNLR) and to use also the information on the state of the target mobile station in the second domain when selecting the domain via which the location request is routed.

7. A system according to claim 5 or 6, **characterized in that** the first network node (GMLC) is arranged to store the result of the location request in a memory and in response to a next location request relating to the same target MS to decide according to predetermined conditions whether the stored result can be used to select the domain.

8. A system according to claim 7, **characterized in that**
the first network node is arranged to indicate in a routing address request whether the state of the target mobile is to be requested; and
the system further comprises a second network node (HLR) having routing addresses for the target MS, the second network node being arranged to request the state of the target MS in response to receiving a routing address request indicating that the state of the target MS is to be requested.

9. A system according to claim 8, **characterized in that**
the second network node (HLR) is arranged to request the state of the target MS in the second domain via the first domain.

10. A system according to claim 5, 6, 7, 8 or 9, **characterized in that** the first domain is a GSM network and the second domain is an UMTS network.

11. A network node (HLR) in a communications system comprising at least a first and a second domain both supporting location services, the network node (HLR) comprising a first routing address to the first domain and a second routing address to the second domain for a mobile station being capable to operate in the first domain and the second domain, **characterized in that**
the network node (HLR) is configured, in response to receiving a routing information request for a location service targeted to the mobile station having the first routing address in the first domain and the second routing address in the second domain, to request the state of the mobile station at least in the first domain.

12. A network node (HLR) according to claim 11, **characterized in that** the network node is further configured to respond to the routing address request by giving only the first routing address in the first domain if the mobile station is active in the first domain.

13. A network node (HLR) according to claim 11, **characterized in that** the network node is further configured to request the state of the mobile station also in the second domain, and to respond to the routing address request by giving the first routing address in the first domain if the target mobile station is attached to the first domain and the second routing address in the second domain if the target mobile station is attached to the second domain.

14. A network node (MSCNLR) in a communications system comprising at least a first and a second domain both supporting location services, the network node (MSCNLR) being arranged to comprise information on the state of a mobile station in the first domain when the mobile station is in the service area of the network node, **characterized in that**
the network node (MSC/VLR) is configured, in response to receiving a request of the state of the mobile station, to request the state of the mobile station in the second domain and, if the mobile station is attached to at least one of the domains, to send a response to the request, the response indicating at least the domain to which the mobile station is attached.

15. A network node according to claim 14, **characterized in that** the network node is further configured to request the state of the mobile station in the second domain only if the request indicates that the state in the second domain is needed.

16. A network node (GMLC) in a communications system comprising at least a first and a second domain both supporting location services, the network node (GMLC) being arranged to perform location services,
**characterized in that** the network node (GMLC) is configured, in response to receiving a location request relating to a target mobile station from a requesting entity, said target mobile having a first routing address in the first domain and a second routing address in the second domain, to request at least the state of the target mobile station in the first domain and to use the state information when deciding via which domain to route the location request.

17. A network node according to claim 16, **characterized in that** the network node (GMLC) is further configured to request the state of the target mobile station in a domain by sending a routing address request indicating that the state of the target mobile is required in the domain.

18. A network node according to claim 16 or 17 **characterized in that** the network node is further configured to store the result of the location request in a memory and in response to a next location request relating to the same target MS to decide according to predetermined conditions whether the stored result can be used to select the domain and if the stored result can be used not to request the state of the target mobile station.

## Patentansprüche

1. Verfahren zum Auswählen einer Domäne, über die eine Ortsanforderung in einem Mobilkommunikationssystem gesendet wird, das mindestens eine erste Domäne und eine zweite Domäne umfasst, die beide Ortsdienste unterstützen, wobei das Verfahren die folgenden Schritte umfasst:
Empfangen einer Ortsanforderung, die eine Zielmobilstation betrifft, von einer anfordernden Entität;
**gekennzeichnet durch**
Anfordern des Zustands der Zielmobilstation mindestens in der ersten Domäne als Reaktion darauf, dass das Zielmobilgerät eine erste Routingadresse in der ersten Domäne und eine zweite Routingadresse in der zweiten Domäne aufweist;
Empfangen von Informationen über den Zustand;
Entscheiden, über welche Domäne die Ortsinformationsanforderung gesendet werden soll, auf der Basis der empfangenen Informationen über den Zustand; und
Senden der Ortsanforderung zu der Zielmobilstation über die erste Domäne, wenn der Zustand angibt, dass die Mobilstation in der ersten Domäne aktiv ist.

2. Verfahren zum Auswählen einer Domäne, über die eine Ortsanforderung in einem Mobilkommunikationssystem gesendet wird, das mindestens eine erste Domäne und eine zweite Domäne umfasst, die beide Ortsdienste unterstützen, wobei das Verfahren die folgenden Schritte umfasst:
Empfangen einer Ortsanforderung, die eine Zielmobilstation betrifft, von einer anfordernden Entität;
**gekennzeichnet durch**
Anfordern des Zustands der Zielmobilstation in der ersten Domäne und in der zweiten Domäne als Reaktion darauf, dass das Zielmobilgerät eine erste Routingadresse in der ersten Domäne und eine zweite Routingadresse in der zweiten Domäne aufweist;
Empfangen von Informationen über die Zustände;
Entscheiden, über welche Domäne die Ortsinformationsanforderung gesendet werden soll, auf der Basis der empfangenen Informationen über die Zustände;
wenn der Zustand des Zielmobilgeräts angibt, dass das Zielmobilgerät von der ersten Domäne abgelöst ist, und der Zustand des Zielmobilgeräts in der zweiten Domäne angibt, dass das Zielmobilgerät an die zweite Domäne angeschlossen ist, Senden der Ortsanforderung zu der Zielmobilstation über die zweite Domäne; und
wenn der Zustand des Zielmobilgeräts in der ersten Domäne und in der zweiten Domäne angibt, dass das Zielmobilgerät an die Domäne angeschlossen ist, Auswählen der zu verwendenden Domäne auf der Basis einer vorbestimmten Menge von Regeln, die mindestens eine Regel umfasst, und Senden der Ortsanforderung über die gewählte Domäne.

3. Verfahren nach Anspruch 1 oder 2, **dadurch gekennzeichnet, dass** die erste Domäne eine leitungsvermittelte Domäne und die zweite Domäne eine paketvermittelte Domäne ist.

4. Verfahren nach Anspruch 1 oder 2, **dadurch gekennzeichnet, dass** die erste Domäne eine paketvermittelte Domäne und die zweite Domäne eine leitungsvermittelte Domäne ist.

5. System (1), das mindestens Folgendes umfasst:
eine erste Domäne (MSC/VLR, SGSN), die einen Ortsdienst unterstützt; und
eine zweite Domäne (MSC/VLR, SGSN), die den Ortsdienst unterstützt,
einen ersten Netzknoten (GMLC) zum Routen einer Ortsdienstanforderung, die eine Zielmobilstation (MS) betrifft, entweder über die erste oder die zweite Domäne;
**dadurch gekennzeichnet, dass**
das System (1) dafür ausgelegt ist, als Reaktion darauf, dass das Zielmobilgerät eine erste Routingadresse in der ersten Domäne und eine zweite Routingadresse in der zweiten Domäne aufweist, den Zustand der Zielmobilstation (MS) mindestens in der ersten Domäne (MSC/VLR, SGSN) anzufordern und die Informationen über den Zustand der Zielmobilstation in der ersten Domäne beim Auswählen der Domäne, zu der die Ortsanforderung zuerst gesendet wird, zu verwenden.

6. System nach Anspruch 5, **dadurch gekennzeichnet, dass**
das System (1) dafür ausgelegt ist, den Zustand der Zielmobilstation (MS) auch in der zweiten Domäne (MSC/VLR) anzufordern und auch die Informationen über den Zustand der Zielmobilstation in der zweiten Domäne beim Auswählen der Domäne, über die die Ortsanforderung geroutet wird, zu verwenden.

7. System nach Anspruch 5 oder 6, **dadurch gekennzeichnet, dass**
der erste Netzknoten (GMLC) dafür ausgelegt ist, das Ergebnis der Ortsanforderung in einem Speicher zu speichern und als Reaktion auf eine nächste Ortsanforderung, die dieselbe Ziel-MS betrifft, gemäß vorbestimmten Bedingungen zu entscheiden, ob das gespeicherte Ergebnis zur Auswahl der Domäne verwendet werden kann.

8. System nach Anspruch 7, **dadurch gekennzeichnet, dass**
der erste Netzknoten dafür ausgelegt ist, in einer Routingadressenanforderung anzugeben, ob der Zustand des Zielmobilgeräts anzufordern ist; und
das System ferner einen zweiten Netzknoten (HLR) umfasst, der Routingadressen für die Ziel-MS aufweist, wobei der zweite Netzknoten dafür ausgelegt ist, als Reaktion auf den Empfang einer Routingadressenanforderung, die angibt, dass der Zustand der Ziel-MS anzufordern ist, den Zustand der Ziel-MS anzufordern.

9. System nach Anspruch 8, **dadurch gekennzeichnet, dass**
der zweite Netzknoten (HLR) dafür ausgelegt ist, den Zustand der Ziel-MS in der zweiten Domäne über die erste Domäne anzufordern.

10. System nach Anspruch 5, 6, 7, 8 oder 9, **dadurch gekennzeichnet, dass** die erste Domäne ein GSM-Netz und die zweite Domäne ein UMTS-Netz ist.

11. Netzknoten (HLR) in einem Kommunikationssystem, das mindestens eine erste und eine zweite Domäne umfasst, die beide Ortsdienste unterstützen, wobei der Netzknoten (HLR) eine erste Routingadresse zu der ersten Domäne und eine zweite Routingadresse zu der zweiten Domäne für eine Mobilstation umfasst, die in der ersten Domäne und der zweiten Domäne betrieben werden kann, **dadurch gekennzeichnet, dass**
der Netzknoten (HLR) dafür ausgelegt ist, als Reaktion auf den Empfang einer Routinginformationsanforderung für einen Ortsdienst, die auf die Mobilstation abgezielt ist, die die erste Routingadresse in der ersten Domäne und die zweite Routingadresse in der zweiten Domäne aufweist, den Zustand der Mobilstation mindestens in der ersten Domäne anzufordern.

12. Netzknoten (HLR) nach Anspruch 11, **dadurch gekennzeichnet, dass** der Netzknoten ferner dafür ausgelegt ist, auf die Routingadressenanforderung zu reagieren, indem er nur die erste Routingadresse in der ersten Domäne gibt, wenn die Mobilstation in der ersten Domäne aktiv ist.

13. Netzknoten (HLR) nach Anspruch 11, **dadurch gekennzeichnet, dass** der Netzknoten ferner dafür ausgelegt ist, den Zustand der Mobilstation auch in der zweiten Domäne anzufordern und auf die Routingadressenanforderung zu reagieren, indem er die erste Routingadresse in der ersten Domäne gibt, wenn die Zielmobilstation an die erste Domäne angeschlossen ist, und die zweite Routingadresse in der zweiten Domäne, wenn die Zielmobilstation an die zweite Domäne angeschlossen ist.

14. Netzknoten (MSC/VLR) in einem Kommunikationssystem, das mindestens eine erste und eine zweite Domäne umfasst, die beide Ortsdienste unterstützen, wobei der Netzknoten (MSC/VLR) dafür ausgelegt ist, Informationen über den Zustand einer Mobilstation in der ersten Domäne zu umfassen, wenn sich die Mobilstation in dem Versorgungsgebiet des Netzknotens befindet, **dadurch gekennzeichnet, dass**
der Netzknoten (MSC/VLR) dafür ausgelegt ist, als Reaktion auf den Empfang einer Anforderung des Zustands der Mobilstation den Zustand der Mobilstation in der zweiten Domäne anzufordern, und, wenn die Mobilstation an mindestens eine der Domänen angeschlossen ist, eine Antwort auf die Anforderung zu senden, wobei die Antwort mindestens die Domäne angibt, an die die Mobilstation angeschlossen ist.

15. Netzknoten nach Anspruch 14, **dadurch gekennzeichnet, dass** der Netzknoten ferner dafür ausgelegt ist, den Zustand der Mobilstation in der zweiten Domäne nur dann anzufordern, wenn die Anforderung angibt, dass der Zustand in der zweiten Domäne benötigt wird.

16. Netzknoten (GMLC) in einem Kommunikationssystem, das mindestens eine erste und eine zweite Domäne umfasst, die beide Ortsdienste unterstützen, wobei der Netzknoten (GMLC) dafür ausgelegt ist, Ortsdienste auszuführen,
**dadurch gekennzeichnet, dass** der Netzknoten (GMLC) dafür ausgelegt ist, als Reaktion auf den Empfang einer Ortsanforderung, die eine Zielmobilstation betrifft, von einer anfordernden Entität, wobei das Zielmobilgerät eine erste Routingadresse in der ersten Domäne und eine zweite Routingadresse in der zweiten Domäne aufweist, mindestens den Zustand der Zielmobilstation in der ersten Domäne anzufordern und die Zustandsinformationen beim Entscheiden, über welche Domäne die Ortsanforderung zu routen ist, zu verwenden.

17. Netzknoten nach Anspruch 16, **dadurch gekennzeichnet, dass** der Netzknoten (GMLC) ferner dafür ausgelegt ist, den Zustand der Zielmobilstation in einer Domäne durch Senden einer Routingadressenanforderung anzufordern, die angibt, dass der Zustand des Zielmobilgeräts in der Domäne erforderlich ist.

18. Netzknoten nach Anspruch 16 oder 17, **dadurch gekennzeichnet, dass** der Netzknoten ferner dafür ausgelegt ist, das Ergebnis der Ortsanforderung in einem Speicher zu speichern und als Reaktion auf eine nächste Ortsanforderung, die dieselbe Ziel-MS betrifft, gemäß vorbestimmten Bedingungen zu entscheiden, ob das gespeicherte Ergebnis zur Auswahl der Domäne verwendet werden kann und ob das gespeicherte Ergebnis verwendet werden kann, um den Zustand der Zielmobilstation nicht anzufordern.

## Revendications

1. Procédé de sélection d'un domaine par le biais duquel une demande de localisation est transmise dans un système de communications mobiles comprenant au moins un premier domaine et un second domaine supportant tous les deux des services de localisation, le procédé comprenant les étapes de :
réception d'une demande de localisation concernant une station mobile cible de la part d'une entité requérante ;
**caractérisé par**
demander, en réponse audit mobile cible ayant une première adresse de routage dans le premier domaine et une seconde adresse de routage dans le second domaine, l'état de la station mobile cible au moins dans le premier domaine ;
recevoir une information sur cet état ;
décider, sur la base de l'information reçue sur l'état, par le biais duquel domaine la demande d'information de localisation doit être transmise ; et
transmettre la demande de localisation à la station mobile cible par le biais du premier domaine si l'état indique que la station mobile est active dans le premier domaine.

2. Procédé de sélection d'un domaine par le biais duquel une demande de localisation est transmise dans un système de communications mobiles comprenant au moins un premier domaine et un second domaine supportant tous les deux des services de localisation, le procédé comprenant les étapes de :
réception d'une demande de localisation concernant une station mobile cible de la part d'une entité requérante ;
**caractérisé par**
demander, en réponse audit mobile cible ayant une première adresse de routage dans le premier domaine et une seconde adresse de routage dans le second domaine, l'état de la station mobile cible dans le premier domaine et dans le second domaine ;
recevoir des informations sur ces états ;
décider, sur la base des informations reçues sur les états, par le biais duquel domaine la demande d'information de localisation doit être transmise ;
si l'état du mobile cible indique que le mobile cible est détaché du premier domaine et si l'état du mobile cible dans le second domaine indique que le mobile cible est rattaché au second domaine, transmettre la demande de localisation à la station mobile cible par le biais du second domaine ; et
si l'état du mobile cible indique, dans le premier domaine et dans le second domaine, que le mobile cible est rattaché au domaine, sélectionner, sur la base d'un ensemble de règles prédéterminé comprenant au moins une règle, le domaine à utiliser, et transmettre la demande de localisation par le biais du domaine sélectionné.

3. Procédé selon la revendication 1 ou 2, **caractérisé en ce que** le premier domaine est un domaine à commutation de circuits et le second domaine à commutation de paquets.

4. Procédé selon la revendication 1 ou 2, **caractérisé en ce que** le premier domaine est un domaine à commutation de paquets et le second domaine est un domaine à commutation de circuits.

5. Système (1) comprenant au moins
un premier domaine (MSC/VLR, SGSN) supportant un service de localisation ; et
un second domaine (MSC/VLR, SGSN) supportant le service de localisation,
un premier noeud de réseau (GMLC) pour router une demande de service de localisation concernant une station mobile cible (MS) par le biais soit du premier, soit du second domaine ;
**caractérisé en ce que**
le système (1) est adapté, en réponse audit mobile cible ayant une première adresse de routage dans le premier domaine et une seconde adresse de routage dans le second domaine, pour demander l'état de la station mobile cible (MS) au moins dans le premier domaine (MSC/VLR, SGSN) et pour utiliser l'information sur l'état de la station mobile cible dans le premier domaine lors de la sélection du domaine auquel la demande de localisation est transmise en premier.

6. Système selon la revendication 5, **caractérisé en ce que** le système (1) est adapté pour demander l'état de la station mobile cible (MS) également dans le second domaine (MSC/VLR) et pour utiliser également l'information sur l'état de la station mobile cible dans le second domaine lors de la sélection du domaine par le biais duquel la demande de localisation est routée.

7. Système selon la revendication 5 ou 6, **caractérisé en ce que**
le premier noeud de réseau (GMLC) est adapté pour enregistrer le résultat de la demande de localisation dans une mémoire et, en réponse à une demande de localisation suivante concernant la même cible MS, pour décider en fonction des conditions prédéterminées si le résultat enregistré peut être utilisé pour sélectionner le domaine.

8. Système selon la revendication 7, **caractérisé en ce que** le premier noeud de réseau est adapté pour indiquer, dans une demande d'adresse de routage, si l'état du mobile cible doit être demandé ; et
le système comprend, en outre, un second noeud de réseau (HLR) ayant des adresses de routage pour la cible MS, le second noeud de réseau étant adapté pour demander l'état de la cible MS en réponse à la réception d'une demande d'adresse de routage indiquant que l'état de la cible MS doit être demandé.

9. Système selon la revendication 8, **caractérisé en ce que** le second noeud de réseau (HLR) est adapté pour demander l'état de la cible MS dans le second domaine par le biais du premier domaine.

10. Système selon la revendication 5, 6, 7, 8 ou 9, **caractérisé en ce que** le premier domaine est un réseau GSM et le second domaine est un réseau UMTS.

11. Noeud de réseau (HLR) dans un système de communications comprenant au moins un premier et un second domaines supportant tous les deux des services de localisation, le noeud de réseau (HLR) comprenant une première adresse de routage vers le premier domaine et une seconde adresse de routage vers le second domaine pour une station mobile capable de fonctionner dans le premier domaine et dans le second domaine, **caractérisé en ce que**
le noeud de réseau (HLR) est configuré, en réponse à la réception d'une demande d'information de routage pour un service de localisation à destination de la station mobile ayant la première adresse de routage dans le premier domaine et la seconde adresse de routage dans le second domaine, pour demander l'état de la station mobile au moins dans le premier domaine.

12. Noeud de réseau (HLR) selon la revendication 11, **caractérisé en ce que** le noeud de réseau est configuré, en outre, pour répondre à la demande d'adresse de routage en donnant seulement la première adresse de routage dans le premier domaine si la station mobile est active dans le premier domaine.

13. Noeud de réseau (HLR) selon la revendication 11, **caractérisé en ce que** le noeud de réseau est configuré, en outre, pour demander l'état de la station mobile également dans le second domaine et pour répondre à la demande d'adresse de routage en donnant la première adresse de routage dans le premier domaine si la station mobile cible est rattachée au premier domaine et la seconde adresse de routage dans le second domaine si la station mobile cible est rattachée au second domaine.

14. Noeud de réseau (MSC/VLR) dans un système de communications comprenant au moins un premier et un second domaines supportant tous les deux des services de localisation, le noeud de réseau (MSC/VLR) étant adapté pour comprendre une information sur l'état d'une station mobile dans le premier domaine lorsque la station mobile se trouve dans la zone de service du noeud de réseau, **caractérisé en ce que**
le noeud de réseau (MSC/VLR) est configuré, en réponse à la réception d'une demande de l'état de la station mobile, pour demander l'état de la station mobile dans le second domaine et, si la station mobile est rattachée à au moins un des domaines, pour envoyer une réponse à la demande, la réponse indiquant au moins le domaine auquel la station mobile est rattachée.

15. Noeud de réseau selon la revendication 14, **caractérisé en ce que** le noeud de réseau est configuré, en outre, pour demander l'état de la station mobile dans le second domaine uniquement si la demande indique que l'état dans le second domaine est nécessaire.

16. Noeud de réseau (GMLC) dans un système de communications comprenant au moins un premier et un second domaines supportant tous les deux des services de localisation, le noeud de réseau (GMLC) étant adapté pour exécuter les services de localisation,
**caractérisé en ce que** le noeud de réseau (GMLC) est configuré, en réponse à la réception d'une demande de localisation concernant une station mobile cible de la part d'une entité requérante, ledit mobile cible ayant une première adresse de routage dans le premier domaine et une seconde adresse de routage dans le second domaine, pour demander au moins l'état de la station mobile cible dans le premier domaine et pour utiliser l'information d'état au moment de décider par quel domaine router la demande de localisation.

17. Noeud de réseau selon la revendication 16, **caractérisé en ce que** le noeud de réseau (GMLC) est configuré, en outre, pour demander l'état de la station mobile cible dans un domaine en envoyant une demande d'adresse de routage indiquant que l'état du mobile cible est nécessaire dans le domaine.

18. Noeud de réseau selon la revendication 16 ou 17, **caractérisé en ce que** le noeud de réseau est configuré, en outre, pour enregistrer le résultat de la demande de localisation dans une mémoire et, en réponse à une demande de localisation suivante concernant la même cible MS, pour décider en fonction des conditions prédéterminées si le résultat enregistré peut être utilisé pour sélectionner le domaine et, si le résultat enregistré peut être utilisé, pour ne pas demander l'état de la station mobile cible.
